# FASCICULE DE BREVET EUROPEEN

(11) **EP 1 913 718 B1**
(45) Date de publication et mention de la délivrance du brevet: **04.03.2009**
(21) Numéro de dépôt: 05819342.6
(22) Date de dépôt: 02.12.2005
(51) Int. Cl.: H04N 7/58, H04N 5/00, H04J 3/16, H04J 3/24, H04B 7/26

(54) **PROCÉDÉ ET DISPOSITIF DE MULTIPLEXAGE DE FLUX DE DONNÉES VÉHICULANT NOTAMMENT DES SERVICES À DIFFUSION MULTIPLEXÉE ET DES SERVICES À DIFFUSION EN RAFALES.**
VERFAHREN UND VORRICHTUNG ZUM MULTIPLEXEN VON DATENSTRÖMEN, DIE INSBESONDERE MULTIPLEX-DIENSTE UND BURST-DIENSTE ÜBERTRAGEN
METHOD AND DEVICE FOR MULTIPLEXING DATA FLOWS CARRYING IN PARTICULAR MULTIPLEXED SERVICES UND BURST-MODE SERVICES

(30) Priorité: 10.12.2004 FR 0413190
(43) Date de publication de la demande: 23.04.2008
(73) Titulaire: THOMSON Licensing, 92100 Boulogne-Billancourt (FR)
(72) Inventeur: OGER, Benoît, F-35135 CHANTEPIE (FR)
(74) Mandataire: Lucas, Laurent Jacques
(86) Numéro de dépôt international: PCT/EP2005/056433
(87) Numéro de publication internationale: WO 2006/061355

(56) Documents cités:
- EP-A- 1 249 954
- US-A- 6 058 109
- US-A1- 2003 166 392
- US-A1- 2004 013 136

## Description

L'invention concerne un procédé de multiplexage de flux de données. En particulier, l'invention s'applique à l'intégration de flux de données, dont la diffusion doit se faire par rafale, à des flux de données multiplexés, en vue d'une émission sur des canaux de transmission numérique.

Les procédés de diffusion de contenu multimédia mis en oeuvre dans les dispositifs de multiplexage gèrent et optimisent, sur un nombre limité de canaux, l'envoi de flux de données, sous forme de paquets de transport entrelacés à un débit paramétré par l'utilisateur. Cela implique que les récepteurs soient en écoute permanente des données qui leurs sont transmises.

Or, la mise à disposition de ces services multimédia vers les récepteurs portables, comme par exemple les téléphones mobiles ou les assistants personnels, nécessite la mise en place de procédés permettant d'optimiser l'utilisation de leurs batteries.

Une solution, appelée émission en rafale, consiste à émettre un train de données suivi d'un intervalle de temps de silence connu à priori, et de répéter ce cycle. L'envoi discontinu de données autorise les équipements à se mettre en veille lors des instants de silence, et à reprendre la réception un peu avant le début de réception du prochain train de données, mécanisme rendu possible par la connaissance de l'heure d'émission du prochain paquet. La norme DVB-H décrit un tel mode de fonctionnement, avec pour objectif d'économiser les sources d'énergie des récepteurs.

Cependant, tous les services diffusés vers ces terminaux ne peuvent être supportés par un flux en mode rafale, par exemple les données des protocoles de signalisation.

A l'idée d'optimiser la consommation d'énergie tout en conservant l'ensemble des services disponibles, se pose le problème de la cohabitation simultanée de ces deux modes de fonctionnement sur une même plate-forme de diffusion Le document US 6058109 divulgue le préambule des revendications 1 et 5.

L'invention a notamment pour but de permettre cette cohabitation simultanée. A cet effet, l'invention a notamment pour objet un procédé de multiplexage selon la revendication 1.

L'invention a également pour objet un dispositif mettant en oeuvre ce procédé de multiplexage.

L'invention a notamment pour avantages qu'elle permet l'ajout ou la suppression dynamique de services à diffusion en rafales, sans perturbation sur la diffusion des autres services. Elle permet aussi de modifier pendant la diffusion la durée des rafales.

D'autres caractéristiques et avantages de l'invention apparaîtront à l'aide de la description qui suit faite en regard des dessins annexés qui représentent :
- la figure 1, un dispositif de multiplexage selon l'état de l'art;
- la figure 2, un système de multiplexage selon l'invention;
- la figure 3, le diagramme d'activité entre les entrées, le gestionnaire et le multiplexeur;
- la figure 4, un exemple d'utilisation de la bande passante par un procédé selon l'invention;
- la figure 5, la construction des champs d'horodatage dans les rafales de données;
- la figure 6, les tampons de données de configuration dans le gestionnaire.

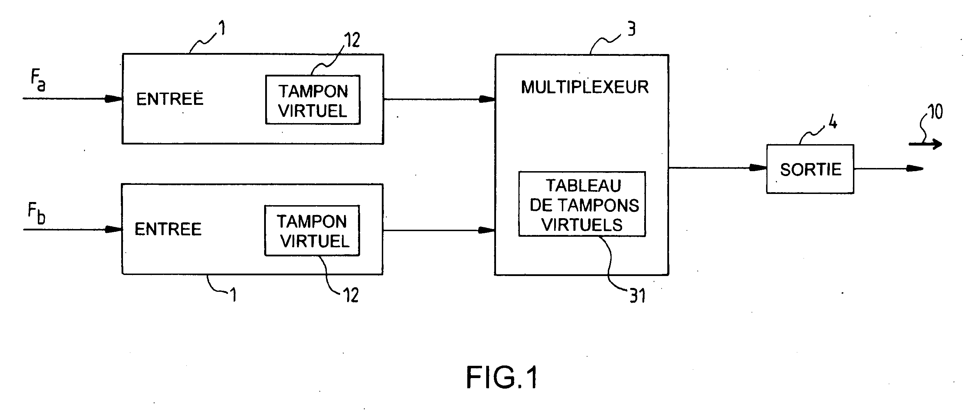

La figure 1 présente, selon l'état de l'art, un multiplexeur 3 disposant d'un ensemble d'entrées 1 munies de plusieurs tampons 12 et d'un ensemble de sortie 4. A titre d'exemple, seules deux entrées et une sortie sont représentées sur la figure 1. Le multiplexeur 3 effectue l'opération de concaténation de données provenant de diverses sources - par exemple des flux de données audio, vidéo, des fichiers... - dans des paquets transports qui forment le flux de données 10. Les entrées 1, dont les données sont destinées à être diffusées en sortie 4 du multiplexeur 3 en mode multiplexée, seront appelées par la suite entrées de mode multiplexé.

L'invention peut s'intégrer dans un procédé de multiplexage, tel que décrit notamment dans la demande de brevet EP 1 249 954. Le procédé de multiplexage dont il est question construit et délivre en sortie des paquets transports de taille *Tₚ* prédéterminée qui forment le flux de données 10. Les entrées 1 des flux de données Fa, Fb ont chacune un tampon virtuel de données 12. Un tampon virtuel de données 12 comporte une valeur de remplissage représentant la quantité d'octets que l'entrée correspondante est autorisée à émettre à un instant donné. Le multiplexeur 3 comprend un tableau 31 de tampons virtuels, dont le dimensionnement est fonction du nombre d'entrée 1.

Le procédé de multiplexage, tel que décrit dans la demande de brevet EP 1249954 et illustré par la figure 1, peut être décrit par la séquence suivante :
- le multiplexeur 3 demande à l'ensemble des entrées 1 de mettre à jour le niveau de remplissage de leur tampon virtuel 12 et récupère ces valeurs afin de les stocker dans son tableau de tampons virtuels 31 ;
- l'entrée, possédant le tampon virtuel 12 dont le niveau de remplissage est le plus élevé, est alors élue par le multiplexeur;
- l'entrée élue fournit un paquet transport au multiplexeur;
- le procédé de multiplexage présente le paquet transport sur sa sortie 4 pour former le flux de données 10.

L'invention permet notamment d'intégrer des rafales de données de manière transparente au flux de données multiplexés en sortie 4 du multiplexeur 3.

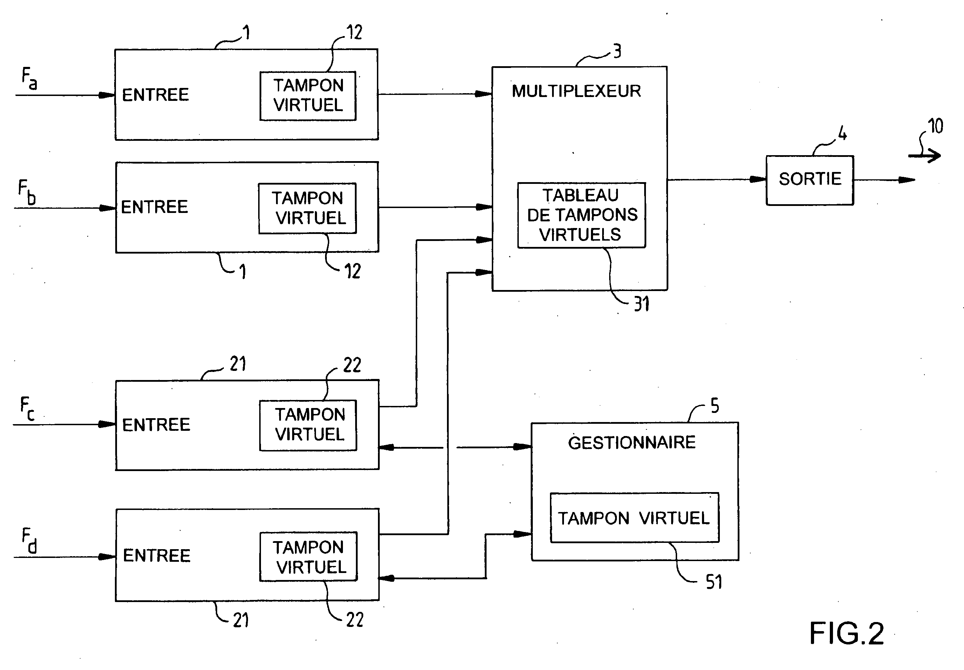

La figure 2 présente un exemple de dispositif de multiplexage selon l'invention. Ce dispositif comprend, en plus du dispositif de la figure 1, des entrées 21 en liaison avec des tampons virtuels 22, un gestionnaire 5. Plus particulièrement, le gestionnaire 5 traite, par l'intermédiaire des tampons virtuels 22, les entrées 21 dont les données sont destinées à être transmises en rafale en sortie 4. Ces entrées 21 seront par la suite appelées entrées de mode rafale. Le gestionnaire 5 comporte un tampon virtuel de données 51. Il en ressort que l'invention permet de faire cohabiter sur des multiplexeurs existants et sans modification de leur procédé de multiplexage des services à diffusion multiplexée et des services à diffusion en rafles.

Le fonctionnement du procédé de multiplexage selon l'invention se fait par exemple de la façon décrite ci-après, à l'aide du dispositif de la figure 2.

Une étape du procédé de multiplexage selon l'invention est l'établissement d'une configuration. Ainsi, les entrées 1 de mode multiplexé sont directement traité par le multiplexeur 3. Aucune configuration de ces entrées vis à vis du gestionnaire 5 n'est requise. Les entrées 21 de mode rafale sont en liaison avec le gestionnaire 5 pour lequel une configuration contenant notamment les consignes de débit de sortie et de durée des rafales est établie.

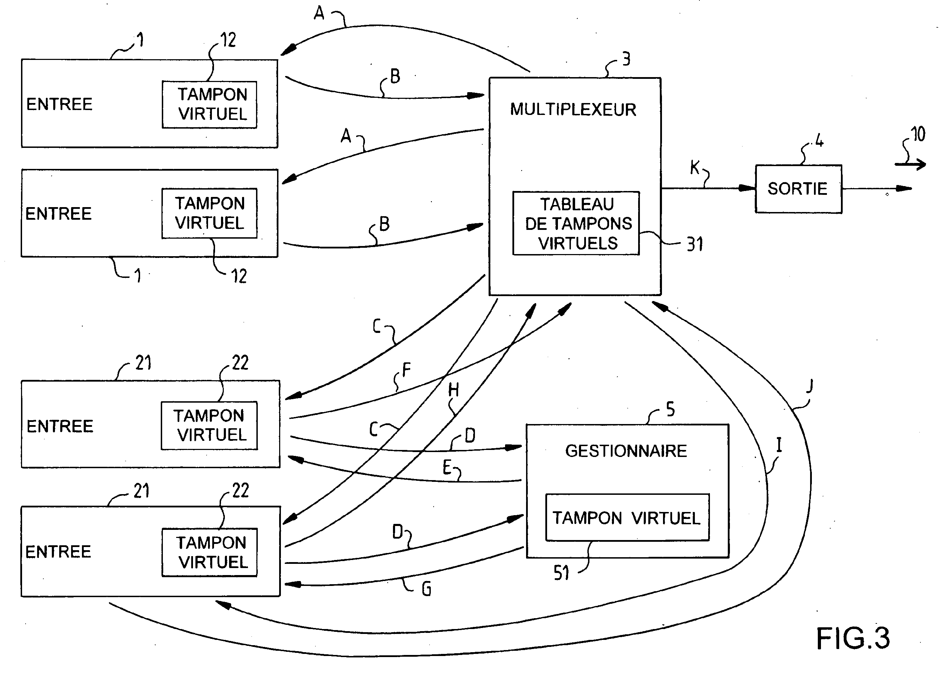

La figure 3 illustre par un exemple une autre étape du procédé de multiplexage selon l'invention qui est la séquence de construction des paquets de transport qui forme le flux de données 10. Par une requête A, le multiplexeur 3 demande aux entrées 1 de mode multiplexé de calculer le niveau de remplissage de leur tampon virtuel 12. Les entrées 1 communiquent, par la réponse B au multiplexeur 3, le niveau de remplissage de leur tampon virtuel de données 12. Le multiplexeur 3 met alors à jour son tableau de tampons virtuels 31.

Le multiplexeur 3 envoie une requête C aux entrées 21 de mode rafale leur demandant le niveau de remplissage de leurs tampons virtuels 22. Les entrées 21 de mode rafale transmettent par un message D au gestionnaire 5 le niveau de remplissage de leur tampon virtuel 22. Le gestionnaire 5 augmente le niveau de remplissage de son tampon de données 51 des valeurs reçues. Le gestionnaire 5 détermine parallèlement par un procédé d'ordonnancement quelle entrée 21 doit fournir les données de la prochaine rafale. Cette entrée 21 sélectionnée sera par la suite appelée entrée élue. Le gestionnaire 5 intime, aux entrées 21 qui n'ont pas été élues, l'ordre E leur indiquant de fixer la valeur de remplissage de leurs tampons virtuels de données 22 à une valeur inférieure à la taille Tp d'un paquet de transport, par exemple 0. Les entrées 21 qui n'ont pas été élues renvoie par le message F au multiplexeur 3 la valeur de remplissage de leur tampon virtuel de données 22, tel que fixé par le gestionnaire 5. Le gestionnaire 5 attribue par un ordre G la valeur de remplissage de son tampon virtuel de données 51 au niveau de remplissage du tampon virtuel 22 de l'entrée élue. Cette valeur est retransmise par un message H au multiplexeur 3.

Une fois l'ensemble des tampons virtuels 12 et 22 mis à jour, le multiplexeur 3 choisit, en fonction de son tableau de tampons virtuels 31, l'entrée qui doit fournir un paquet transport. Grâce au mécanisme précédent, l'entrée est forcément une entrée de mode multiplexée 1 ou l'entrée de mode rafale 21 élue, les autres entrées de mode rafale 21 ayant un niveau de remplissage de leur tampon virtuel 21 nul ou inférieure à la taille Tp d'un paquet de transport. Le multiplexeur 3 demande par une requête I à l'entrée qu'il vient de choisir, sur l'exemple de la figure 3 une entrée 21, de lui fournir un paquet transport. L'entrée choisit, ici une entrée 21, renvoie par un message J le paquet de transport. Le multiplexeur 3 la présente par un message K sur une sortie 4.

Selon un mode de réalisation, plusieurs groupes d'entrées 21 de mode rafale sont constitués et configurés, un groupe comprenant des entrées présentant des caractéristiques semblables ou voisines. Chaque groupe est associé à un gestionnaire 5. Le gestionnaire 5 étant transparent pour le multiplexeur 3, les étapes décrites précédemment s'appliquent.

Selon un mode de réalisation, le gestionnaire 5 peut être intégré au multiplexeur 3.

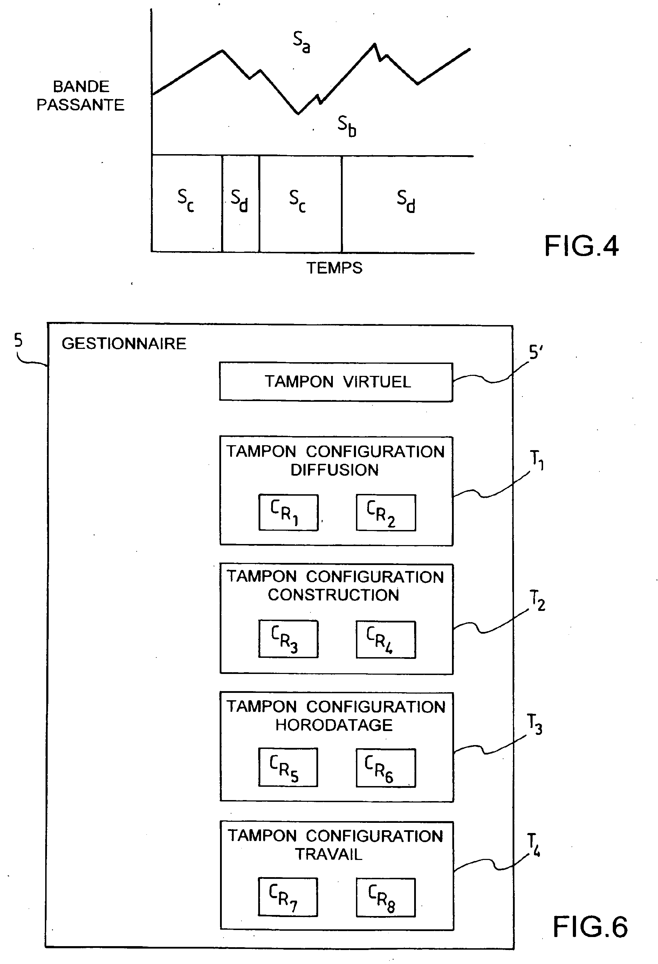

La figure 4 montre un exemple d'utilisation de la bande passante par le procédé selon l'invention. La bande passante y est représentée en ordonnés alors que le temps figure en abscisse. Le service Sa et Sb véhiculé par le flux de données Fa et Fb sont tous les deux des services à diffusion multiplexée. Les services Sc et Sd issus des flux Fc et Fd sont quant à eux des services à diffusion en rafale. On observe que les rafales de données associées Sc et Sd sont diffusés sur des intervalles de temps définis avec un débit majorant.

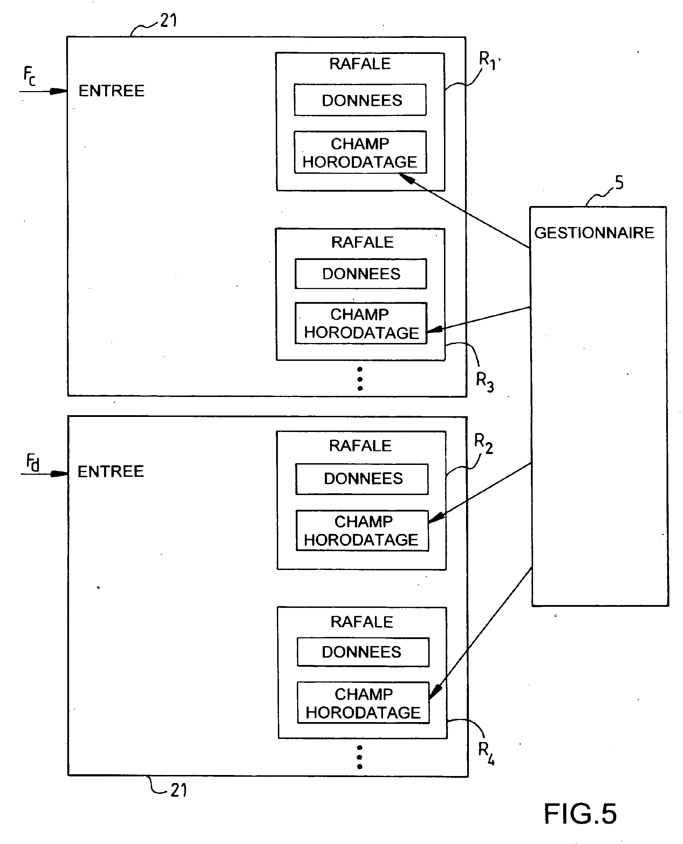

La figure 5 illustre l'ordonnancement des champs d'horodatage dans les rafales de données. Dans l'exemple d'utilisation pour la norme DVB-H, le mode rafale impose un mécanisme d'horodatage relatif pour que les récepteurs connaissent l'instant auquel le prochain train de données en mode rafale va leur parvenir, afin de pouvoir stopper la réception puis de se remettre en état d'écoute entre deux rafales de données et ainsi économiser leur énergie. Avant d'être traitée par le multiplexeur 3, une rafale de données est horodatée par le gestionnaire 5. La figure 5 montre donc la construction par le gestionnaire 5 des champs d'horodatage. Dans cet exemple, un cycle d'émission de données est constitué par l'enchaînement de rafale de données, déterminé par avance à l'aide d'un procédé d'ordonnancement, provenant des flux Fc puis Fd, et ainsi de suite. Le gestionnaire 5 insère dans la rafale de données R1 un champ contenant l'instant auquel la rafale de données R3 sera émise.

La figure 6 représente un schéma de construction possible des configurations relatives à chaque rafale, reposant sur un mécanisme à 4 tampons :
- un tampon de diffusion T1, correspondant à la configuration CR1 et CR2 des rafales de données en cours de diffusion;
- un tampon de construction T2, représentant la prochaine configuration qui sera mise en diffusion et qui est en construction. Il correspond à la configuration des rafales de données qui seront immédiatement diffusées après celles en cours de diffusion, à savoir dans notre exemple CR3 et CR4;
- un tampon d'horodatage T3, qui contient les configurations des données précédant celle du tampon de construction, indispensable aux calculs d'horodatage, ici CR5 et CR6;
- un tampon de travail T4 dans lequel l'utilisateur peut effectuer des manipulations, comme par exemple l'ajout d'un nouveau flux à traiter, la suppression d'un flux existant ou encore la modification de la durée entre chaque rafale, sans perturber les autres tampons, correspondant sur la figure aux configurations CR7 et CR8.

Lorsqu'un cycle de diffusion est achevé - dans l'exemple l'émission des rafales R1, R2 provenant des entrées 21 -, les configurations CR1, CR2 des rafales de données R1 et R2 du tampon de diffusion T1 sont remplacées par les configurations CR3, CR4 des rafales de données R3, R4 du tampon de construction T2. De la même manière, les configurations CR5, CR6 des rafales de données R5, R6 du tampon d'horodatage T3 remplacent les configurations CR3, CR4. Enfin si une modification a été enregistrée, les configurations CR7, CR8 stockées dans le tampon de travail T4 sont copiées dans le tampon d'horodatage T3.

Lorsqu'un flux de données arrivant sur une entrée 21 est interrompu, le tampon de travail T4 est mis à jour, puis, après un premier basculement de l'ensemble des tampons T1, T2, T3 et T4, il n'y a plus de données de configuration provenant de l'entrée 21 interrompue dans le tampon d'horodatage T3. Enfin, après deux basculements de tampon, les données correspondantes ne sont plus prises en compte et l'horodatage des données a pu être mis à jour sans erreur.

## Revendications

1. Procédé de multiplexage de flux de données (Fa, Fb, Fc, Fd) dans un dispositif de multiplexage comportant :
**caractérisé en ce que** ledit procédé comporte au moins les étapes suivantes :
o élection d'une entrée (21) de mode rafale par un procédé d'ordonnancement pour émettre la prochaine rafale de données;
o affectation au niveau de remplissage du tampon virtuel (22) de l'entrée (21) élue de la somme des niveaux de remplissage des tampons virtuel de données (22);
o attribution au niveau de remplissage du ou des tampons virtuels (22) de la ou des autres entrées (21) de mode rafale d'une valeur nulle ou inférieure à un niveau qui pourrait permettre la sélection de ces entrées par le multiplexeur (3).

2. Procédé selon la revendication 1 **caractérisé en ce que** les entrées (21) de mode rafale de flux de données (Fc, Fd) sont groupées en fonction d'un ou plusieurs paramètres donnés et **en ce qu'**à chaque groupe ainsi défini correspond un gestionnaire (5).

3. Procédé selon la revendication 1 **caractérisé en ce qu'**il comporte en outre les étapes suivantes :
- augmentation du niveau de remplissage d'un tampon virtuel de données (51) de la valeur de remplissage du tampon de données d'une entrée (21) de mode rafale, lorsque celle-ci lui est communiquée;
- décrémentation du niveau de remplissage de son tampon virtuel de données (51) de la taille des données contenue dans le paquet de données formé par une entrée (21) de mode rafale qui lui est associé;
- au moins un multiplexeur (3),
- au moins une entrée (1) de flux de données (Fa, Fb) dont la diffusion en sortie du multiplexeur (3) prend la forme de flux multiplexés (10),
- au moins deux entrée (21) de mode rafale de flux de données (Fc, Fd), comportant chacune un tampon virtuel de données (22), dont la diffusion en sortie du multiplexeur (3) prend la forme de rafales de données,
- fixation la valeur de remplissage du tampon virtuel (22) de l'entrée (21) désignée pour émettre la prochaine rafale au niveau de remplissage de son propre tampon (51).

4. Procédé selon la revendication 1 **caractérisé en ce qu'**il inscrit dans un champ de données situé dans chaque rafale l'instant auquel la prochaine rafale sera émise.

5. Dispositif de multiplexage de flux de données, comportant :
- au moins un multiplexeur (3);
- au moins une entrée (1) de flux de données (Fa, Fb) dont la diffusion en sortie du multiplexeur (3) prend la forme de flux multiplexés (10);
- au moins deux entrées (21) de mode rafale de flux de données (Fc, Fd), comportant chacune un tampon virtuel de données (22), dont la diffusion en sortie du multiplexeur (3) prend la forme de rafales de données;
**caractérisé en ce qu'**il comporte en outre :
- au moins un gestionnaire (5) adapté aux tâches suivantes :
o élection d'une entrée (21) de mode rafale par un procédé d'ordonnancement pour émettre la prochaine rafale de données;
o affectation au niveau de remplissage du tampon virtuel (22) de l'entrée (21) élue de la somme des niveaux de remplissage des tampons virtuel de données (22);
o attribution au niveau de remplissage du ou des tampons virtuels (22) de la ou des autres entrées (21) de mode rafale d'une valeur nulle ou inférieure à un niveau qui pourrait permettre la sélection de ces entrées par le multiplexeur (3).

6. Dispositif selon la revendication 5 **caractérisé en ce que** les entrées (21) de mode rafale de flux de données (Fc Fd) sont groupées en fonction d'un ou plusieurs paramètres donnés et **en ce qu'**à chaque groupe ainsi défini correspond un gestionnaire (5).

7. Dispositif selon la revendication 5 **caractérisé en ce que** le gestionnaire (5) comportant un tampon virtuel de données (51), il est adapté pour :
- augmenter le niveau de remplissage de son tampon virtuel de données (51) de la valeur de remplissage du tampon de données d'une entrée (21) de mode rafale, lorsque celle-ci lui est communiquée;
- décrémenter le niveau de remplissage de son tampon virtuel de données (51) de la taille des données contenue dans le paquet de données formé par une entrée (21) de mode rafale qui lui est associé;
- fixer la valeur de remplissage du tampon virtuel (22) de l'entrée (21) désignée pour émettre la prochaine rafale au niveau de remplissage de son propre tampon (51).

8. Dispositif selon la revendication 5 **caractérisé en ce que** le gestionnaire (5) est adapté pour inscrire dans un champ de données situé dans chaque rafale de données l'instant auquel la prochaine rafale de données sera émise.

9. Dispositif selon la revendication 5 **caractérisé en ce que** le gestionnaire (5) comporte plusieurs tampons de données (T1, T2, T3, T4) relatives à la configuration et à l'horodatage des rafales pour chaque entrée (21) de mode rafale.

## Claims

1. Method of multiplexing data streams (Fa, Fb, Fc, Fd) in a multiplexing device comprising:
- at least one multiplexer (3),
- at least one input (1) for data streams (Fa, Fb) whose broadcasting as output from the multiplexer (3) takes the form of multiplexed streams (10),
- at least two burst mode inputs (21) for data streams (Fc, Fd), each comprising a virtual buffer for data (22), whose broadcasting as output from the multiplexer (3) takes the form of data bursts,
**characterized in that** said method comprises at least the following steps:
o election of a burst mode input (21) by an ordering method so as to send the next data burst;
o assignment to the fill level of the virtual buffer (22) of the elected input (21) of the sum of the fill levels of the virtual data buffers (22);
o allocation to the fill level of the virtual buffer or buffers (22) of the other burst mode input or inputs (21) of a zero value or one which is below a level which could allow the selection of these inputs by the multiplexer (3).

2. Method according to Claim 1 **characterized in that** the burst mode inputs (21) for data streams (Fc, Fd) are grouped as a function of one or more given parameters and **in that** to each group thus defined there corresponds a manager (5).

3. Method according to Claim 1 **characterized in that** it furthermore comprises the following steps:
- increasing the fill level of a virtual data buffer (51) by the fill value of the data buffer of a burst mode input (21), when the latter is communicated to it;
- decrementing the fill level of its virtual data buffer (51) by the size of the data contained in the data packet formed by a burst mode input (21) associated therewith;
- fixing the fill value of the virtual buffer (22) of the input (21) designated to send the next burst at the fill level of its own buffer (51).

4. Method according to Claim 1 **characterized in that** it writes in a data field situated in each burst the instant at which the next burst will be sent.

5. Device for multiplexing data streams, comprising:
- at least one multiplexer (3) ;
- at least one input (1) for data streams (Fa, Fb) whose broadcasting as output from the multiplexer (3) takes the form of multiplexed streams (10);
- at least two burst mode inputs (21) for data streams (Fc, Fd), each comprising a virtual buffer for data (22), whose broadcasting as output from the multiplexer (3) takes the form of data bursts;
**characterized in that** it further comprises:
- at least one manager (5) adapted for the following tasks:
o election of a burst mode input (21) by an ordering method so as to send the next data burst;
o assignment to the fill level of the virtual buffer (22) of the elected input (21) of the sum of the fill levels of the virtual data buffers (22);
o allocation to the fill level of the virtual buffer or buffers (22) of the other burst mode input or inputs (21) of a zero value or one which is below a level which could allow the selection of these inputs by the multiplexer (3).

6. Device according to Claim 5 **characterized in that** the burst mode inputs (21) for data streams (Fc, Fd) are grouped as a function of one or more given parameters and **in that** to each group thus defined there corresponds a manager (5).

7. Device according to Claim 5 **characterized in that** the manager (5) comprising a virtual data buffer (51) is adapted for:
- increasing the fill level of its virtual data buffer (51) by the fill value of the data buffer of a burst mode input (21), when the latter is communicated to it;
- decrementing the fill level of its virtual data buffer (51) by the size of the data contained in the data packet formed by a burst mode input (21) associated therewith;
- fixing the fill value of the virtual buffer (22) of the input (21) designated to send the next burst at the fill level of its own buffer (51).

8. Device according to Claim 5 **characterized in that** the manager (5) is adapted for writing in a data field situated in each data burst the instant at which the next data burst will be sent.

9. Device according to Claim 5 **characterized in that** the manager (5) comprises several data buffers (T1, T2, T3, T4) for data relating to the configuration and to the time-stamping of the bursts for each burst mode input (21).

## Patentansprüche

1. Verfahren zum Multiplexen von Datenströmen (Fa, Fb, Fc, Fd) in einer Multiplexeinrichtung, die aufweist:
- mindestens einen Multiplexer (3),
- mindestens einen Eingang (1) von Datenströmen (Fa, Fb), deren Diffusion am Ausgang des Multiplexers (3) die Form von gemultiplexten Strömen (10) annimmt,
- mindestens zwei Eingänge (21) im Burst-Modus von Datenströmen (Fc, Fd), die je einen virtuellen Puffer (22) von Daten aufweisen, deren Diffusion am Ausgang des Multiplexers (3) die Form von Daten-Bursts annimmt,
**dadurch gekennzeichnet, dass** das Verfahren mindestens die folgenden Schritte aufweist:
o Wahl eines Eingangs (21) im Burst-Modus durch ein Zeitablaufsteuerungsverfahren, um den nächsten Daten-Burst auszugeben;
o Zuordnung zum Füllpegel des virtuellen Puffers (22) des ausgewählten Eingangs (21) der Summe der Füllpegel der virtuellen Datenpuffer (22);
o Zuweisung zum Füllpegel des virtuellen Puffers oder der virtuellen Puffer (22) des anderen Eingangs oder der anderen Eingänge (21) im Burst-Modus eines Werts Null oder geringer als ein Pegel, der die Auswahl dieser Eingänge durch den Multiplexer (3) erlauben könnte.

2. Verfahren nach Anspruch 1, **dadurch gekennzeichnet, dass** die Eingänge (21) im Burst-Modus von Datenströmen (Fc, Fd) in Abhängigkeit von einem oder mehreren gegebenen Parametern gruppiert werden, und dass jeder so definierten Gruppe ein Verwaltungsprogramm (5) entspricht.

3. Verfahren nach Anspruch 1, **dadurch gekennzeichnet, dass** es außerdem die folgenden Schritte aufweist:
- Erhöhen des Füllpegels eines virtuellen Datenpuffers (51) um den Füllwert des Datenpuffers eines Eingangs (21) im Burst-Modus, wenn dieser ihm mitgeteilt wird;
- Dekrementieren des Füllpegels seines virtuellen Datenpuffers (51) um die Datengröße, die in dem von einem Eingang (21) im Burst-Modus gebildeten Datenpaket enthalten ist, das ihm zugeordnet ist;
- Festlegen des Füllwerts des virtuellen Puffers (22) des bezeichneten Eingangs (21), um den nächsten Burst auf dem Füllpegel seines eigenen Puffers (51) auszugeben.

4. Verfahren nach Anspruch 1, **dadurch gekennzeichnet, dass** es in ein in jedem Burst befindliches Datenfeld den Zeitpunkt einschreibt, in dem der nächste Burst ausgegeben wird.

5. Vorrichtung zum Multiplexen von Datenströmen, die aufweist:
- mindestens einen Multiplexer (3);
- mindestens einen Eingang (1) von Datenströmen (Fa, Fb), deren Diffusion am Ausgang des Multiplexers (3) die Form von gemultiplexten Strömen (10) annimmt;
- mindestens zwei Eingänge (21) im Burst-Modus von Datenströmen (Fc, Fd), die je einen virtuellen Puffer (22) von Daten aufweisen, deren Diffusion am Ausgang des Multiplexers (3) die Form von Daten-Bursts annimmt;
**dadurch gekennzeichnet, dass** sie außerdem aufweist:
- mindestens ein Verwaltungsprogramm (5), das für die folgenden Tasks geeignet ist:
o Wahl eines Eingangs (21) im Burst-Modus durch ein Zeitablaufsteuerungsverfahren, um den nächsten Daten-Burst auszugeben;
o Zuordnung zum Füllpegel des virtuellen Puffers (22) des ausgewählten Eingangs (21) der Summe der Füllpegel der virtuellen Datenpuffer (22);
o Zuweisung zum Füllpegel des virtuellen Puffers oder der virtuellen Puffer (22) des anderen Eingangs oder der anderen Eingänge (21) im Burst-Modus eines Werts Null oder geringer als ein Pegel, der die Auswahl dieser Eingänge durch den Multiplexer (3) erlauben könnte.

6. Vorrichtung nach Anspruch 5, **dadurch gekennzeichnet, dass** die Eingänge (21) im Burst-Modus von Datenströmen (Fc, Fd) in Abhängigkeit von einem oder mehreren gegebenen Parametern gruppiert werden, und dass jeder so definierten Gruppe ein Verwaltungsprogramm (5) entspricht.

7. Vorrichtung nach Anspruch 5, **dadurch gekennzeichnet, dass** das Verwaltungsprogramm (5), da es einen virtuellen Datenpuffer (51) aufweist, geeignet ist, um:
- den Füllpegel seines virtuellen Datenpuffers (51) um den Füllwert des Datenpuffers eines Eingangs (21) im Burst-Modus zu erhöhen, wenn dieser ihm mitgeteilt wird;
- den Füllpegel seines virtuellen Datenpuffers (51) um die Datengröße zu dekrementieren, die in dem von einem Eingang (21) im Burst-Modus gebildeten Datenpaket enthalten ist, das ihm zugeordnet ist;
- den Füllwert des virtuellen Puffers (22) des bezeichneten Eingangs (21) festzulegen, um den nächsten Burst auf dem Füllpegel seines eigenen Puffers (51) auszugeben.

8. Vorrichtung nach Anspruch 5, **dadurch gekennzeichnet, dass** das Verwaltungsprogramm (5) geeignet ist, um in ein in jedem Daten-Burst befindliches Datenfeld den Zeitpunkt einzuschreiben, in dem der nächste Daten-Burst ausgegeben wird.

9. Vorrichtung nach Anspruch 5, **dadurch gekennzeichnet, dass** das Verwaltungsprogramm (5) mehrere Datenpuffer (T1, T2, T3, T4) bezüglich der Konfiguration und der Datum- und Uhrzeitangabe der Bursts für jeden Eingang (21) im Burst-Modus aufweist.
